(19) Europäisches Patentamt
European Patent Office
Office européen des brevets

(11) Publication number: **0 103 120**
**A2**

# (12) EUROPEAN PATENT APPLICATION

(21) Application number: **83107300.2**

(22) Date of filing: **25.07.83**

(51) Int. Cl.³: **C 08 F 10/00**, C 08 F 4/64

(30) Priority: **26.07.82 JP 130190/82**

(43) Date of publication of application: **21.03.84 Bulletin 84/12**

(84) Designated Contracting States: **DE FR GB IT NL**

(71) Applicant: **TOYO STAUFFER CHEMICAL CO. LTD., 7-7, Akasaka 1-chome Minato-ku, Tokyo (JP)**

(72) Inventor: **Takitani, Masaru, No. 2612-76, Ooaza Fukugawa, Shinnanyo-shi Yamaguchi-ken (JP)**
Inventor: **Tomiyasu, Shizuo, No. 1031-38, Ooaza Tonda, Shinnanyo-shi Yamaguchi-ken (JP)**
Inventor: **Baba, Keikichi, No. 2591, Ooaza Tonda, Shinnanyo-shi Yamaguchi-ken (JP)**

(74) Representative: **Patentanwälte TER MEER - MÜLLER - STEINMEISTER, Triftstrasse 4, D-8000 München 22 (DE)**

## (54) Process for producing a catalyst component used for the polymerization of alpha-olefins.

(57) Process for producing a catalyst component used for the polymerization of α-olefin which comprises breating a solid product, which is obtained by reacting an organomagnesium compound with a halogenated carbon in the presence of an electron donor compound, with a titanium compound in the presence of a halogenated carbon.

The catalyst component is a novel Ziegler-Type supported catalyst component used for the polymerization of α-olefins, which has particle sizes abundant in uniformity, an excellent flowability, and in addition a high polymerization activity and production ratio of stereospecific polymers.

EP 0 103 120 A2

DETAILED EXPLANATION OF THE INVENTION

This invention relates to a process for producing a novel Ziegler-Type supported catalyst component (hereinafter merely referred to as catalyst component for the abbreviation except for particularly and expressly stated) used for the polymerization of α-olefins, which has particle sizes abundant in uniformity, an excellent flowability, and in addition a high polymerization activity and production ratio of stereospecific polymers.

More particularly, it relates to a process for producing a catalyst component used for the polymerization of α-olefin,

which comprises treating a solid product which is obtained by reacting an organomagnesium compound represented by the general formula

$$R^1MgX^1$$

wherein $R^1$ shows a hydrocarbon group having 1 to 20 carbon atoms and $X^1$ shows a halogen atom or a hydrocarbon group having 1 to 20 carbon atoms with a halogenated carbon in the presence of an electron donor compound, with a titanium compound represented by the general formula

$$Ti(OA)_l X_{4-l}$$

wherein A shows an aryl group, X shows a halogen atom and l shows a real number of $0 < l < 4$ in the presence of a halogenated carbon.

Features of this invention which are to be expressly stated lie not only in that weights of product polymers obtainable from the catalyst component are large based on the unit weight of the catalyst component, that is, the polymerization activity is high but also in that the bulk density of the product polymers and the production ratio of the stereospecific polymers, in which drawbacks of known Ziegler-Type supported catalysts exist, are greatly improved. Furthermore, a feature of this invention other than the above-stated features, which is to be expressly stated, lies in that it makes possible the stereospecific polymerization of α-olefins, especially propylene in a high temperature, which has hithertofore been very difficult.

In general, it is well known that so called Ziegler-Natta catalysts comprising compounds of transition metals Groups

IV to VI of the periodic table and organometallic compounds of metals of Groups I to III are used as catalysts for producing stereospecific α-olefin polymers.

In cases wherein polymers of α-olefins such as propylene, butene 1 and the like are industrially produced, catalyst components containing titanium trichloride as the main component is used as the compounds of the transition metals of Groups IV to VI. These catalyst compounds are such ones resulting from the activation treatment of an eutectic crystals comprising titanium trichloride and aluminum chloride which are obtained by reducing titanium tetrachloride with metallic aluminum, by means of the pulverization and the like; or ones resulting from the activation of titanium trichloride by means of the treatment with an organic ether compound and titanium tetrachloride, which titanium trichloride is obtained by reducing titanium tetrachloride with an organoaluminum compound. It is general to use the catalyst component in a catalyst system in the polymerization of α-olefins, in which the catalyst component is coupled with an organoaluminum compound.

However, α-olefin polymers produced by the polymerization carried out in the presence of the catalyst system contain catalyst residues in an amount of several hundred ppm and it is necessary to remove the transition metals such as titanium and the like among the catalyst residues remaining in the polymers as far as possible because they promote the degradation of the polymers. Therefore it is the present real situation wherein the catalyst is removed by washing

the product polymers with alcohols in a production step of α-olefin polymers.

Recently, for the purpose of reducing the production cost of α-olefins, many catalyst components have been proposed for the purpose that high polymerization activity is attached so as to eliminate the deashing step in which the transition metals such as titanium and the like is removed by washing in the polymerization steps. That is to say, it is aimed to reduce the production cost of α-olefin polymers in a way in that if it is possible to attain the amount of the product polymer to a value of one hundred thousand or some hundred thousand weight parts based on the unit weight of the transition metals such as titanium, then the content of the transition metals such as titanium which remain in the product polymers become several ppm or less and therefore the promotion of the degradation of the polymers due to the transition metals reaches a level which could be neglected to make it possible to omit the deashing processing.

Most of these catalyst components are Ziegler-Type supported catalyst components having as carrier magnesium chloride or magnesium chloride having surface treatment applied by some processes, on which surface titanium chloride is supported. However, in the process for the production of the catalyst components in which magnesium chloride is used as the starting material for the carrier, not only the catalyst components produced by using magnesium chloride but also the polymers have been remarkably inferior to in particle characteristics such as flowability, because it is necessary to provide with a pulverizing step in which magnesium chloride is pulverized and activated at the same time and further the pulverization gives magnesium chloride in a powder state of crushed pieces lacking the uniformity of particle size as well as ones simultaneously produced in very fine powder state in a large amount.

Recently, there are many propositions as to catalyst components improved in the particle characteristics, in which organomagnesium compounds are used as the starting material on the production of the carriers. Typical ones among these propositions are exemplified as follows:

There are proposed in Japanese unexamined patent application publication No. 123594/1979, a process in that after a complex consisting of an organomagnesium compound and an organoaluminum compound is reacted with tertiary alkyl halide, the resulting product is treated with a carboxylic acid ester and titanium tetrachloride; in Japanese unexamined patent application publication No. 133584/1979, a process in which after a solid state product obtained by the reaction of an organomagnesium compound and an organohalide is treated with an electron donor compound, titanium tetrachloride is supported on the product; in Japanese unexamined patent application publication No. 76492/1979, a process in which after a reaction product of an organomagnesium compound and a polyhydric alcohol is treated with an electron donor compound, titanium tetrachloride is supported on the product; in Japanese unexamined

patent application publication Nos. 43094/1978 and 107987/1979, a process in which titanium tetrachloride is supported on a carrier obtained by reacting silicon tetrachloride with a reaction product of an organomagnesium compound and a hydropolysiloxane, or on a carrier obtained by directly reacting silicon tetrachloride with the organomagnesium compound; in Japanese unexamined patent application publication No. 58207/1980 a process in which a solid reaction product obtained by reacting an organomagnesium compound with silicon tetrachloride is reacted with an alcohl and a carboxylic acid ester, and then reacted with titanium tetrachloride; in Japanese unexamined patent application publication No. 133408/1980 a process in which a solid state organomagnesium compound is treated with an aromatic alcohol and an electron donor compound, and then treated with titanium tetrachloride; and in Japanese unexamined patent application publication No. 59914/1982, a process in which a solid state product obtained by reacting an organomagnesium compound with silicon tetrachloride or a halogen -containing organoaluminum compound is treated with a titanium compound having a bonding between titanium and phenoxy group as well as a bonding between titanium and a halogen in the presence of an inert solvent.

However, these catalyst components and the like have drawbacks in that they may be ones having not so high polymerization activity so as to be able to eliminate the deashing step or ones showing low production ratio as to stereospecific polymers, even though they have high polymerization activity,

or they may show high polymerization activity at the first stage of the polymerization with rapid reduction in the polymerization activity or they may give product polymers of low bulk density. Therefore, it seems that they have not yet been actually used.

Furthermore, another drawback of known Ziegler-Type supported catalyst components lies in polymerization characteristics in high temperature. That is to say, it is necessary for high activity catalyst components to have characteristics capable of sufficiently maintaining their performance on the polymerization of α-olefins at high temperature, because the more the catalyst components are high in activity, the more the instantaneous calorific powers are large and accordingly, it may substantially impossible to prevent localized overheatings if it could be possible to effect the overall temperature -control within polymerization vessels.

On the other hand, research and development as to processes for the gas-phase polymerization of α-olefins have recently been flourishingly conducted for the purpose of simplifying the polymerization processes of α-olefins. This gas-phase polymerization is to polymerize α-olefins in high temperature, and it is usual in the case of the gas-phase polymerization of propylene, for example, to carry out it at a high temperature not less than 90°C.

The production ratio of stereospecific polymers may be remarkably reduced in the polymerization using known catalyst components at a temperature more than 80°C, which is usually

carried out at a temperature of 60 to 70°C, or at most 80°C of the upper limit and therefore, they can not apply to the polymerization of propylene at the high temperature. In addition, it is necessary that the catalyst components, which are used in a process using a fluidized bed as a polymerization apparatus of the gas-phase polymerization, should be abundant in the uniformity in particle size but it is difficult to apply to the process a catalyst component produced, for example, by a process having a co-pulverization step because it lacks the uniformity of particle size and has very fine particles in much amount.

Accordingly, it has been desired in the field of the gas-phase polymerization of α-olefins to develop catalyst components which are excellent in the polymerization characteristics in high temperature and abundant in the uniformity of particle size.

The inventors have accomplished this invention as a result of extensive research carried out for improving the above-stated drawbacks which the above-stated Ziegler-Type catalyst component supporting titanium have.

That is to say, this invention relates to a process for producing a catalyst component used for the polymerization of an α-olefin comprising treating a solid product which is obtained by reacting an organomagnesium compound represented by the general formula,

$$R^1MgX^1$$

wherein $R^1$ shows a hydrocarbon group having 1 to 20 carbon

atoms and $X^1$ shows a halogen atom or a hydrocarbon group having 1 to 20 carbon atoms with a halogenated carbon in the presence of an electron donor compound, with a titanium compound represented by the general formula

$$Ti(OA)_l X_{4-l}$$

wherein A shows an aryl group having 6 to 20 carbon atoms, X shows a halogen atom and l shows a real number of $0 < l < 4$ in the presence of a halogenated carbon.

A feature of this invention on the production of the catalyst component lies in to provide as necessary conditions with that the reaction of the organomagnesium compound and the halogenated carbon is carried out in the presence of the electron donor compound and that the thus produced solid state product is treated with $Ti(OA)_l X_{4-l}$, wherein A shows an aryl group, X shows a halogen atom and l shows a real number of $0 < l < 4$, in the presence of the halogenated carbon. Its advantages, not only lie in that the catalyst component and the polymer are excellent in particle characteristics and are high in the production activity as well as the production ratio of stereospecific polymers but also lie in that it can greatly improve the bulk density of polymers, where known Ziegler-Type catalyst components have drawbacks.

Further surprising advantages of this invention lie in that it is made possible to conduct the stereospecific polymerization of α-olefins in high temperature, for example, the stereospecific polymerization of propylene at a temperature not lower than 90°C, which has been hitherto very difficult,

so that it is possible to carry out a stable stereospecific polymerization of α-olefins, even when a Ziegler-Type supported catalyst is used and in addition, it is made possible to conduct the gas-phase polymerization of α-olefins.

This invention is further explained in detail hereinbelow.

The electron donor compounds which can be used in this invention are at least one class of compound selected from organic acid esters, organic ether compounds, polysiloxanes, thioethers, organic ketones and amines or their mixtures.

The above-stated organic acid esters are particularly aliphatic carboxylic acid esters and aromatic carboxylic acid esters. Examples of the aliphatic carboxylic acid esters are primary alkyl esters of saturated aliphatic carboxylic acids such as methyl formate, ethyl acetate, n-amyl acetate, 2-ethyl hexyl acetate, n-butyl formate, ethyl butyrate, ethyl valerate and the like; alkenyl esters of saturated aliphatic carboxylic acids such as vinyl acetate, allyl acetate and the like; primary alkyl esters of unsaturated aliphatic acids such as methyl acrylate, methyl methacrylate, n-butyl crotonate and the like; polyvalent carboxylic acid esters such as 2-ethyl hexyl adipate and the like; and lactones such as γ-butyrolactone, δ-valerolactone and the like; and the like.

Examples of aromatic carboxylic acid esters are primary alkyl esters of benzoic acid such as methyl benzoate, ethyl benzoate, n-propyl benzoate, n-or iso-butyl benzoate, n- or iso-amyl benzoate, n-hexyl benzoate, n-octylbenzoate, 2-ethyl

hexyl benzoate and the like; primary alkyl esters of toluic acid such as methyl toluate, ethyl toluate, n- or iso-butyl toluate 2-ethyl hexyl toluate and the like; primary alkyl esters of anisic acid such as methyl anisate, ethyl anisate, n-propyl anisate and the like; primary alkyl esters of naphthoic acid such as methyl naphthoate, ethyl naphthoate, n-propyl naphthoate, n-butyl naphthoate, 2-ethyl hexyl naphthoate and the like; aromatic lactones such as coumarin, phthalides and the like; and the like. Among them, methyl benzoate, ethyl benzoate, methyl toluate, ethyl toluate, methyl anisate, ethyl anisate, methyl naphthoate and ethyl naphthoate are effective.

The above-stated organic ether compounds as the electron donor compounds are compounds having ether bondings, which are shown by the general formula $R^2OR^3$, wherein $R^2$ and $R^3$ shows hydrocarbon groups having 1 to 15 carbon atoms, which can be same or different to each other; polyethers having at least two of the ether-bonding within one molecule; and cyclic ethers having rings formed with in the ether molecules. Particularly, there are exemplified aliphatic ethers such as ethyl ether, propyl ether, isopropyl ether, butyl ether, isobutyl ether, amyl ether, isoamyl ether, hexyl ether, octyl ether, decyl ether, dodecyl ether, methyl propyl ether, methyl isopropyl ether, methyl butyl ether, methyl isobutyl ether, methyl amyl ether, methyl isoamyl ether, methyl hexyl ether, ethyl propyl ether, ethyl isopropyl ether, ethyl butyl ether, ethyl isobutyl ether, ethyl amyl ether, ethyl isoamyl ether,

ethyl hexyl ether, vinyl ether, allyl ether, methyl allyl ether, ethyl vinyl ether, ethyl allyl ether, butyl vinyl ether, and the like; aromatic ethers such as anisole, phenetole, butyl phenyl ethers, amyl phenyl ethers, methoxy toluenes, benzyl ethyl ether, phenyl ether, benzyl ether, phenyl benzyl ether, naphthyl ether, veratrole and the like; cyclic ethers such as propylene oxide, trimethylene oxide, epoxy butane, dioxane, trioxane, furan, methyl furans, tetrahydrofuran, tetrahydropyran, cineole and the like; and polyethers such as dimethoxy ethane, diethoxy ethane, dibutoxy ethane, diethylene glycol dimethyl ether, diethylene glycol diethyl ether, diethylene glycol dibutyl ether, methylal, acetal, glycerol ethers, crown ethers and the like.

As to the above-stated polysiloxanes as the electron donor compounds, there are exemplified siloxane polymers having repeating units shown by the general formula

$$-\!\!\left[\begin{array}{c} A \\ | \\ Si-O \\ | \\ Z \end{array}\right]_n\!\!-$$

wherein A and Z represent groups which can bond to silicon, for Example, hydrogen, alkyl groups having carbon numbers of 1 to 8, aryl groups having carbon numbers not more than 10, halogens, alkoxyl groups having carbon numbers of 1 to 8, aryloxy groups having carbon numbers not more than 10, aliphatic carboxylic acid residues having carbon numbers not more than 20 and the like, and n represents a number of 3 to 10,000; or siloxane polymers having at least two species of the above-stated repeating units in molecule in various ratios and distributions. Particularly, there are exemplified, for example, alkyl siloxane polymers such as octamethyl trisiloxane, octaethyl cyclotetrasiloxane, dimethyl polysiloxane, methyl ethyl polysiloxane and the like; aryl siloxane polymers such as hexaphenyl cyclotrisiloxane, diphenyl polysiloxanes and the like; alkyl aryl siloxane polymers such as diphenyl hexamethyl tetrasiloxane, methyl phenyl polysiloxanes and the like; haloalkyl siloxanes such as 1,5-dichloro hexamethyl trisiloxane, 1,7-dichloro octamethyl tetrasiloxane and the like; alkoxy siloxane polymers such as dimethoxy polysiloxanes, diethoxy polysiloxanes and the like; aryloxy siloxane polymers such as diphenoxy polysiloxanes; and the like.

The above-stated thioethers as the electron donor compounds are compounds shown by the general formula $R^4SR^5$, wherein $R^4$ and $R^5$ represent hydrocarbon groups having carbon numbers of 1 to 20. Particularly, there are exemplified diethyl thioether, di-n-propyl thioether, di-n-butyl thioether, di-n-amyl thioether, di-n-hexyl thioether, di-n-octyl thioether, di-n-decyl thioether, methyl phenyl thioether, ethyl phenyl thioether, diphenyl thioether, ditoluyl thioether, dibenzyl thioether, diallyl thioether, allyl phenyl thioether and the like.

As to the above-stated organic ketones as the electron donor compounds, there are exemplified compounds shown by the general formula, $R^6COR^7$, wherein $R^6$ and $R^7$ represent hydrocarbon groups, for example, of which hydrocarbon groups are such ones as alkyl groups having carbon numbers of 1 to 15, such

as methyl, ethyl, propyl, butyl, pentyl, octyl and the like, aryl groups having carbon numbers not more than 15, such as phenyl toluyl, xylyl and the like or aralkyl groups having carbon numbers not more than 15, such as benzyl. As particular ones, there are exemplified aliphatic ketones such as acetone, methyl ethyl ketone, dibutyl ketone, dipentyl ketone and the like; aromatic ketones such as acetophenone, benzophenone and the like; and the like.

As to the above-stated amines as the electron donor compounds, there are exemplified compounds shown by the general formula, 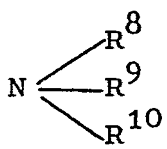 , wherein $R^8$ represents a hydrocarbon group and $R^9$ and $R^{10}$ represent hydrogen or hydrocarbon groups, for example, ones of which hydrocarbon groups are alkyl groups having carbon numbers of 1 to 15, such as methyl, ethyl, propyl, butyl, octyl and the like; aryl groups having carbon numbers not more than 15, such as phenyl, toluyl, xylyl and the like; aralkyl groups having carbon numbers not more than 15, such as benzyl; or the like. As particular examples, there are listed primary, secondary and tertiary aliphatic amines such as diethyl amine, triethyl amine, n-propyl amine, di-n-propyl amine, tri-n-propyl amine, n-butyl amine, di-n-butyl amine, tri-n-butyl amine, n-octyl amine, di-n-octyl amine, tri-n-octyl amine and the like; primary, secondary and tertiary aromatic amines such as aniline, N-methyl aniline, N,N-dimethyl aniline, diphenyl amine, triphenyl amine, N,N-dimethyl benzyl amine;

and the like. Compounds which have not less than two amine nitrogens in molecule, for example, tetramethyl methylene diamine, ethylene diamine, tetramethyl ethylene diamine, tetraethyl ethylene diamine and the like can be also used.

The used amounts of these electron donor compounds vary depending on the species of the electron donor compounds but are generally not less than 0.001 mol, preferably not less than 0.01 mol, most preferably not less than 0.1 mol based on 1 mol of the organomagnesium compound. The amount less than 0.001 mol gives a low production ratio of the stereospecific polymers and it is difficult to obtain a practical catalyst component. As to the upper limit, there is no specific restriction but it is preferable to use them in an amount not more than 20 mols, because no specially remarkable effect is obtained by the use of them in an amount more than 20 mols.

The organomagnesium compound used in this invention are shown by the general formula $R^1MgX^1$, wherein $R^1$ represents a hydrocarbon group having 1 to 20 carbon atoms and $X^1$ represents a halogen atom selected from chlorin, bromine and iodine or a hydrocarbon group or having 1 to 20 carbon atoms. Particularly the following ones can be exemplified; diethyl magnesium, di-n-propyl magnesium, di-iso-propyl magnesium, di-iso-amyl magnesium, iso-amyl ethyl magnesium, iso-amyl-n-propyl magnesium, di-n-amyl magnesium, n-amyl-n-propyl magnesium, n-butyl-n-t-butyl magnesium, n-butyl propyl magnesium, dibutenyl magnesium, di-n-butyl magnesium, n-butyl ethyl magnesium, n-butyl-sec-butyl magnesium, di-t-butyl magnesium,

di-sec-butyl magnesium, dicyclopentadienyl magnesium, diphenyl magnesium, di-n-hexyl magnesium, n-hexyl ethyl magnesium, bis (methyl cyclopentadienyl) magnesium, dihexynyl magnesium, dicyclohexyl magnesium, dibenzyl magnesium, bis(phenyl ethynyl) magnesium, dicinnamyl magnesium, n-octyl ethyl magnesium, di-n -octyl magnesium, di-n-decyl magnesium, methyl magnesium chloride, methyl magnesium bromide, methyl magnesium iodide, ethynylene magnesium dibromide, vinyl magnesium chloride, vinyl magnesium bromide, ethyl magnesium chloride, ethyl magnesium bromide, ethyl magnesium iodide, allyl magnesium chloride, propenyl magnesium bromide, isopropenyl magnesium bromide, n-propyl magnesium chloride, n-propyl magnesium bromide, iso-propyl magnesium chloride, isopropyl magnesium bromide, 1 -methyl propenyl magnesium bromide, tetramethylene magnesium dibromide, t-butyl magnesium chloride, n-butyl magnesium chloride, sec-butyl magnesium chloride, cyclopentadienyl magnesium chloride, cyclopentadienyl magnesium bromide, p -phenylene magnesium dibromide, phenyl magnesium chloride, phenyl magnesium bromide, styryl magnesium chloride, styryl magnesium bromide, 1-methyl-2,2-diphenylcyclopropyl magnesium bromide, amyl magnesium chloride, hexyl magnesium chloride, benzyl magnesium chloride, octyl magnesium chloride, decyl magnesium chloride and the like; Among these organomagnesium compounds, n-butyl ethyl magnesium, n-hexyl ethyl magnesium, d-n-hexyl magnesium, n-octyl ethyl magnesium, di-n-butyl magnesium, di-n-octyl magnesium, ethyl magnesium chloride, n-butyl magnesium chloride, n-octyl magnesium chloride are

especially preferable because of their convenience in using.

These organomagnesium compounds are used in this invention after they are solubilized to a solution state by a solvent selected from aliphatic hydrocarbons such as hexane, heptane, a kerosene and the like; alicyclic hydrocarbons such as cyclohexane, methyl cyclohexane and the like; aromatic hydrocarnons such as benzene, toluene, xylene and the like; the above-stated organic ether compounds; the above-stated amines; or their mixtures.

Then, the halogenated carbon used in this invention for obtaining the solid state product is a compound shown by the general formula, $C_mX^2{}_{2m+2}$, wherein $X^2$ represents a halogen atom selected from chlorine, bromine and iodine and m represents an integer of $1 \leqq m \leqq 10$. Particularly, carbon tetrachloride, carbon tetrabromide, carbon tetraiodide, hexachloroethane, hexabromoethane, hexaiodoethane, octachloropropane and the like can be exemplified, among which it is preferable to use carbon tetrachloride or hexachloroethane because of their economic nature, convenience in handling and the performance of catalyst.

The organomagnesium compound is admixed with the halogenated carbon to react in the presence of the electron donor compound in this invention. This admixing can be carried out either by adding the halogenated carbon into the organomagnesium compound or the reverse, or by simultaneously adding both the reactants to admix. However, it is desirable on handling the organomagnesium compound to add and admix the halogenated carbon after diluted with a hydrocarbon or without the dilution

into the organomagnesium compound dissolved in a solvent, because the organomagnesium compound is generally a viscous substance though it depends on the species and the concentration of the organomagnesium compound.

It is preferable that the concentration of the organomagnesium compound in the solvent, which varies depending on the structure of the organomagnesium compound represented by the general formula, $R^1MgX^1$ and on the number of carbon atoms as well as on the halogen atom, is not more than 50% by weight, preferably not more than 45% by weight and especially not more than 40% by weight. The viscosity of the solvent which has dissolved the organomagnesium compound increases to make the processing such as stirring and the like difficult when the concentration exceeds 50% by weight, because the organomagnesium compound is a viscous substance as stated above. On the other hand, the lower limiting value is not especially restricted but it is desirable to be not less than 0.1% by weight considering the productivity of the catalyst components.

By the way, it is desirable to have reacted the organomagnesium compound with the electron donor compound before they are admixed with the halogenated carbon, in a way in that the electron donor compound is added into the solvent which have dissolved the organomagnesium compound or that after the organomagnesium compound is dissolved in the electron donor compound they are diluted with solvent.

The halogenated carbon is for substituting the hydrocarbon group or groups with the halogen atom or atoms and it

is preferable to use it in an amount of 0.01 to 10 mols, preferably 0.05 to 5 mols and especially 0.1 to 3 mols based on 1 mol of the hydrocarbon group of the organomagnesium compound.

The temperature is not especially limitative at the time of the reaction between the organomagnesium compound and the halogenated hydrocarbon but it is desirable to react them at a low temperature, at which the reaction rate does not extremely decreases, because they vigorously react at high temperature. In this view point, it is desirable to carry out the reaction in a range of -50 to 100°C, preferably -30 to 80°C and especially preferably -20 to 50°C.

In addition, it is preferable, though it depends on the temperature at the time of the reaction, to conduct the stirring and admixing for 0.1 to 10 hours at the temperature of the reaction or after the temperature is elevated from the reaction temperature upto the extent not more than 150°C, in order to complete the reaction.

The solid state product obtained by the reaction is separated from the reaction system by the solid-liquid separation by means of the decantation, filtration, centrifugal separation and so on. It is preferable to wash the separated solid state product by a hydrocarbon solvent such as hexane, heptane, a kerosene, cyclohexane, methylcyclohexane, benzene, toluene, xylene and the like.

The thus separated solid state product is heated to treat with the titanium compound represented by the general formula $Ti(OA)_lX_{4-l}$, wherein A shows an aryl group, X shows

a halogen atom and l shows a real number of $0 < l < 4$, in the presence of a halogenated carbon.

The halogenated hydrocarbon used in the above heat treatment is one belonging to the class of the halogenated carbon used for obtaining the above-stated solid state product.

Both the halogenated hydrocarbons may be common or different to through both the steps.

This solid state product is suspended in the halogenated carbon in the absence or presence of the hydrocarbon solvent (1 - 99% by volume) and is heated to treat with the titanium compound shown by the above-stated general formula, $Ti(OA)_lX_{4-l}$, in the presence of the halogenated carbon at a temperature of 40 to 150°C, preferably 50 to 150°C, and especially preferably 60 to 150°C for 0.1 to 10 hours.

It is necessary to use the halogenated carbon in an amount not less than 0.1 mol based on 1 mol of magnesium existing in the solid state product. An amount less than 0.1 mol can not exert the effect due to the halogenated carbon. The upper limit is not especially restricted but it is preferable an amount less than 100 mols. If an amount not less than 100 mols might be used, there is no remarkable effects due to it.

The halogen X of the compound represented by the general formula, $Ti(OA)_lX_{4-l}$, which is used in this invention is chlorine, bromine iodine or the like, among which chlorine is especially preferable.

As the aryloxy group OA, p-methyl phenoxy group, ethyl

phenoxy group, isopropylphenoxy group, t-butylphenoxy group, phenyl phenoxy group, β-naphthoxy group, 5-indanoxy group, p-chlorophenoxy group, bromophenoxy groups, phenoxy group, iodophenoxy groups, p-methoxy phenoxy group, ethoxy phenoxy groups, phenoxy phenoxy groups and the like are listed.

Among them, a p-hydrocarbyl phenox group such as p-methyl phenoxy group or the like is preferable.

As to the number 1, the value is of $0 < 1 < 4$, preferably $0 < 1 < 2$, more preferably $0 < 1 < 1$ and especially preferably $0.02 < 1 < 0.8$.

The activity of the catalysts and the stereospecificity are improved by leaps and bounds by using such an aryloxy titanium halide compound as compared with a case, wherein it is contacted to react with the corresponding titanium halide or a case, wherein the halogenated titanium is contacted with a carrier which has been contacted to treat with the corresponding phenol.

This aryloxytitanium halide compound can be synthesized by known processes.

One way is that it can be synthesized by a substitution reaction of between the corresponding titanium compound containing a halogen and the corresponding phenol. When both the compounds are admixed, the reaction proceeds to generally generate a hydrogen halide. It is necessary to substantially complete this substitution reaction in order to be used in this invention. The completion of this reaction can be confirmed by the existence or absence of absorptions due to

OH groups in the infra-red absorption spectrum of the reaction material. When 0.1 mol of titanium tetrachloride and 0.05 mol of p-cresol are admixed at 120°C, for example, HCl gas is vigorously generated and a titanium compound having an average composition of $(4\text{-}CH_3\text{-}C_6H_4O)_{0.5}TiCl_{3.5}$ is obtained.

As another way, a reaction material resulting from a disproportionation reaction of an orthotitanic acid ester of the corresponding phenol and the corresponding titanium compound containing a halogen can also be used. When 0.39 mol of titanium tetrachloride and 0.01 mol of titanium tetra-p-methyl phenolate are admixed, for example, a titanium compound having an average composition of $(4\text{-}CH_3\text{-}C_6H_4O)_{0.1}TiCl_{3.9}$ is obtained.

As the titanium compound containing a halogen used in the above synthesis, titanium tetrahalides such as titanium tetrachloride, titanium tetrabromide, halogenated titanates such as methoxy titanium trichloride, ethoxy titanium trichloride and the like can be exemplified but titanium tetrahalides, especially titanium tetrachloride are preferable.

The used amount of the aryloxytitanium halide compound is from 0.1 to 100 ml based on 1 g of the above-stated solid state product and especially preferably from 0.5 to 50 ml.

After the solid and liquid are separated by the decantation or filtration and further after the aryloxy titanium compound or the like are washed with a hydrocarbon such as hexane, heptane, a kerosence, cyclohexane, methyl cyclohexane, benzene, toluene, xylene and the like, the catalyst component

can be obtained in a slurry state in the hydrocarbon or in a dry state.

The catalyst component obtained by the above processing has particle size abundant in uniformity and is excellent in the flowability.

The catalyst component of this invention can be used by coupling with an organoaluminum compound as a catalyst component for the polymerization or copolymerization of α-olefins.

The organo aluminum compound which can be used by coupling with the catalyst component of this invention, is a compound shown by the general formula, $AlR^{12}{}_rX^4{}_{3-r}$, wherein $R^{12}$ shows a hydrocarbon group having carbon number of 1 to 20, $X^4$ shows a halogen atom selected from fluorine, chlorine, bromine and iodine or hydrogen, r shows a real number of $0 < r \leqq 3$. Particularly, there can be exemplified trimethyl aluminum, triethyl aluminum, tri-n-propyl aluminum, tri-n-butyl aluminum, triisobutyl aluminum, tri-n-hexyl aluminum tri-2-methylpentyl aluminum, tri-n-octyl aluminum, tri-n-decyl aluminum, diethyl aluminum chloride, di-n-propylaluminum chloride, diisobutyl aluminum chloride, methyl aluminum sesquichloride, ethyl aluminum sesquichloride, ethyl aluminum dichloride, isobutyl aluminum dichloride, diethyl aluminum fluoride, diethyl aluminum bromide, diethyl aluminum iodide, diethyl aluminum hydride, diisobutyl aluminum hydride, isoprenyl aluminum and the like. These organoaluminum compounds can be used alone or by admixture of at least two species.

It is preferable that the used amount of the organoaluminum compound, when it is calculated by converting it into the amount in mol of aluminum contained in the organoaluminum compound is from 1 to 1000 expressed in a ratio of the converted value per 1 mol of the titanium contained in the catalyst component of this invention, which is used in combination with the organoaluminum compound, that is Al/Ti.

It is possible to allow the coexistence of a known electron donor compound on the polymerization for the purpose of further improving the catalyst performance and the like of the above -state combination catalyst.

As the known electron donor compound which is allowed to coexist, there can be exemplified the electron donor compound which is used in the production of the above-stated catalyst component of this invention.

As to the amount of the electron donor compound used on the above-stated polymerization, it is used within a range of 0.01 to 3 mols based on 1 mol of the organoaluminum compound used in combination with the catalyst component of this invention, preferably 0.05 to 2 mol and especially 0.1 to 1 mol.

As to the polymerization (copolymerization) process, the polymerization can be carried out by a suspension polymerization process in which aromatic hydrocarbons such as benzene, toluene, xylene and the like, aliphatic hydrocarbons such as hexane, heptane, octane, kerosene and the like, alicyclic hydrocarbons such as cyclohexane, methyl cyclohexane and the like are used as solvent; a liquid phase polymerization process in which a liquefied α-olefin is used as solvent; or a gas-phase

polymerization process in which an α-olefin is polymerized in a gas-phase. As the polymerization (copolymerization) system, it is possible to use a batch system and a continuous flow system.

As to the α-olefins which can be polymerized (copolymerized) by using the catalyst component of this invention, there are organic compounds of the general formula, $CH_2 = CHR^{13}$, wherein $R^{13}$ shows hydrogen or a hydrocarbon group having 1 to 6 carbon atoms, for example, ethylene, propylene, butene-1, 4-methyl pentene-1, hexene-1, styrene and the like. Control of molecular weight of the polymer on the (co-)polymerization is according to well known methods using hydrogen or diethyl zinc.

As to the polymerization (copolymerization) temperature, the polymerization is carried out within a temperature range of 0 to 200°C, desirably 40 to 120°C. It is preferable to carry out the polymerization (copolymerization) under the pressure of atmospheric pressure to 100 atm, desirably from atmospheric pressure to 60 atm.

The polymers which are obtainable in a polymerization (copolymerization) process using the catalyst component of this invention are granular and have particle size abundant in uniformity, large bulk density and very excellent particle characteristics and it is possible to market the polymers without passing through the peletizing step.

This invneiton is explained in detail in Examples herein -below.

The polymerization activity (A), the heptane-insoluble component (H.I.), the isotactic index (I.I.) and the bulk density ($\rho$B) have meanings in Examples as follows:

A : The weight(g) of the solid product polymer based on the unit time (hr.), the unit pressure (atm) and the unit weight(g) of the catalyst component.
(g-polymer/g-catalyst component.hr.atm)

H.I.: n-heptane insoluble polymer(g) x 100 / solid polymer(g) (%)

I.I.: n-heptane insoluble polymer(g) x 100 / total product polymer(g) (%)

$\rho$B : Bulk density (g/ml) of the product solid polymer measured according to Method A of ASTM-D-1895-69.

Ti : The content of titanium contained in the catalyst component (% by weight)

EXAMPLE 1

(1) Preparation of Catalyst Component

(1 - 1) Reaction of an Organomagnesium Compound and a Halogenated Carbon

n-Butyl ethyl magnesium was used as the organomagnesium compound. Into a 300 ml four necked flask provided with a stirrer, of which interior had been replaced with dry nitrogen, 161 ml of a n-heptane solution of n-butyl ethyl magnesium (concentration being 0.65 mol/l, made by Texas Alkyls Corp.) was poured. The flask was immersed in a refrigerant and the solution was cooled to 0°C. After 2.0 ml of ethyl benzoate was added as the electron donor compound into the solution

under stirring, which added amount of the ethyl benzoate corresponded to 0.134 mol based on 1.0 mol of n-butyl ethyl magnesium, 25 ml of carbon tetrachloride diluted with 75 ml of n-heptane was further added dropwise as the halogenated carbon, which added amount of carbon tetrachloride corresponded to 2.55 mols based on 1.0 mol of n-butyl ethyl magnesium. After the addition of carbon tetrachloride the solution was maintained under stirring for 40 minutes at 0°C, for 40 minutes at the normal temperature and for 60 minutes at 80°C to give a solid product.

Then, after the solution was left standing to cool it to the normal temperature the stirring was stopped. After the solid state product was sedimented, the supernatant was extracted by the decantation. After that, 200 ml of n-heptane was again poured into the flask and the stirring, sedimentation and the decantation were repeated 5 times to wash the solid state product.

(1 - 2) Synthesis of a Aryloxytitanium Halide Compound

After a 200 ml flask provided with a stirrer and a thermometer was replaced with argon, 35.7 ml of titanium tetrachloride and 17.3 ml of p-cresol were charged and the temperature was elevated to 120°C. A reaction proceeded with the generation of hydrogen chloride. After the reaction system was maintained at the temperature for 1 hour, 1 ml of the black red colored reaction solution was sampled, of which the infra-red absorption spectrum was measured. No absorption due to the stretching vibration of the OH group of p-cresol was observed and a liquid

state titanium compound represented by the average composition, $Ti(O-C_6H_4-4-CH_3)_{0.5}Cl_{3.5}$ was obtained.

(1 - 3) Treatment with an Aryloxytitanium Halide Compound in the Presence of a Halogenated Carbon

The solid state product obtained in the above-stated (1 - 1) was charged into the reaction liquid product obtained in the above-stated (1 - 2) and further 80 ml of $CCl_4$ was added as the halogenated carbon. They are treated under stirring at 80°C for 2 hours.

After this treatment they are left standing to cool and filtered. After the filtration mass was washed with 1 l of n -heptane, which was then vacuum-dryed at 40°C for 5 hours to give a catalyst component in an amount of 10 g.

The resulting catalyst component consisted of particles abundant in uniformity which had an average particle diameter of 40 µ. Results of it's composition analysis showed that the titanium content was 3.1 %.

(2) Polymerization of Propylene

(2 - 1) Low Pressure Polymerization (Polymerization Process A)

After 400 ml of n-heptane, 0.5 ml of triethyl aluminum, 0.1 ml of diethyl aluminum chloride and 0.16 ml of ethyl p -anisate were pured into an 1 l flask, of which interior had been replaced with dry nitrogen, 0.1 g of the catalyst component

was charged.

After the internal temperature of the flask was elevated to 70°C, the flask was shaken to agitate and propylene gas was simultaneously introduced up to the pressure of 2 $kg/cm^2G$ to initiate the polymerization of propylene. The polymerization of propylene was carried out for 2.5 hours, while the internal temperature and the internal pressure of the flask were maintained at 70°C and 2 $kg/cm^2G$, respectively.

After the completion of the polymerization the shaken agitation and the supply of the propylene gas were stopped and after the propylene gas existing in the flask was purged out of the system, a mixture liquid of methyl alcohol and isopropyl alcohol were poured to decompose the catalyst component. The polymer slurry remaining in the flask was filtered to recover the solid state polymer and the filtrate was evaporated to recover low molecular weight polymers which were dissolved in the filtrate. Results are shown in Table 1. The I.I. of the product polymer was 94.5 %.

(2 - 2) High Pressure Polymerization
(Polymerization Process B)

Into a 5 l autoclave, of which interior had been replaced with dry nitrogen, were charged 40 mg of the catalyst component, 0.5 ml of triethyl aluminum, 0.1 ml of diethyl aluminum chloride and 0.16 ml of ethyl p-anisate. Then, after hydrogen was introduced into the autoclave to give a hydrogen pressure of 0.4 $kg/cm^2G$, 1.5 kg of liquid propylene were charged by pressure.

Stirring was initiated when the internal temperature of the autoclave reached 80°C by heating, at which time the initiation of the polymerization was deemed. After the polymerization of propylene was carried out for 2 hours, while maintaining the internal temperature of the autoclave at 80°C, the stirring was stopped and the propylene gas remaining in the system was purged at the same time to recover the solid polymer. Results are shown in Table 1.

COMPARATIVE EXAMPLE 1

The production of a catalyst component was carried out in the same way as in Example 1 except for the treatment of Example 1 was carried out in the presence of monochlorobenzene in stead of carbon tetrachloride and propylene was polymerized according to Polymerization Process B. Results are shown in Table 1.

EXAMPLE 2

A 500 ml volume flask provided with a dropping funnel and a water-cooled reflux condenser was replaced by dry nitrogen and 14.6 g (0.6 mol) of metallic magnesium powder having 100 to 200 mesh size, 363 ml of n-heptane and a small piece of iodine were charged into the flask, of which temperature was elevated to 95°C. Then, a mixture of 0.5 mol of n-butyl chloride and 0.5 mol of di-n-butyl ether was weighed and charged in the dropping funnel, which was added dropwise under stirring during course of 2 hours at 90 to 100°C. After the completion of the addition the stirring was further continued for 4 hours at 90 to 100°C and then settled, and the supernatant was recovered in nitrogen. As the result of analysis of the liquid, this liquid was a heptane solution of an organomagnesium butyl ether coordination compound having the composition of n-BuMgCl, in which the concentration of the organometal was 0.73 mol/l.

The catalyst component was produced in the same way as in Example 1 except for using 143 ml of the n-heptane solution of the above-stated n-butyl magnesium chloride·butyl ether coordination substance as the organomagnesium compound. The propylene was polymerized according to Polymerization Process B. Results are shown in Table 1.

EXAMPLE 3

The catalyst component was produced in the same way as in Example 2 except for using as the organomagnesium compound 0.105 mol/l of a n-heptane solution of ethyl magnesium chloride ·ethyl ether which had been prepared according to the process of Example 2. Then propylene was polymerized according to Polymerization Process B. Results are shown in Table 1.

EXAMPLE 4

The catalyst component was prepared in the same way as in Example 1 except for using 161 ml of a n-heptane solution of di-n-hexyl magnesium (concentration = 0.65 mol/l) as the organomagnesium compound and the polymerization of propylene was carried out according to Polymerization Process B. Results are shown in Table 1.

EXAMPLE 5

The catalyst component was prepared in the same way as in Example 1 except for using 75 ml of a n-butyl ether solution of n-butyl magnesium chloride (concentration = 1.4 mol/l) as the organomagnesium compound and the polymerization of propylene was carried out according to Polymerization Process B. Results are shown in Table 1.

EXAMPLE 6

The catalyst component was produced in the same way as in Example 1 except for using 200 ml of a mixture solution of carbon tetrachloride and n-heptane (volume ratio = 1 : 4) as the halogenated carbon on the heat treatment by the aryloxy titanium halide compound which was carried out in the presence of the halogenated carbon. Propylene was polymerized according to Polymerization Process B. Results are shown in Table 1.

EXAMPLE 7

The catalyst component was produced in the same way as in Example 1 except for using 200 ml of a mixture solution of carbon tetrachloride and n-heptane (volume ratio = 1 : 9) as the halogenated carbon on the heat treatment by the aryloxy titanium halide compound which was carried out in the presence of the halogenated carbon. Propylene was polymerized according to Polymerization Process B. Results are shown in Table 1.

EXAMPLE 8

The catalyst component was produced in the same way as

in Example 1 except for conducting the heat treatment with the aryloxy titanium halide compound in the presence of the halogenated carbon, at 110°C using a solution prepared by dissolving 40 g of hexachloroethan into 200 ml of toluene as the halogenated carbon. Propylene was polymerized according to Polymerization Process B. Results are shown in Table 1.

EXAMPLE 9

The catalyst component was produced in the same way as in Example 1 except for using an aryloxytitanium halide compound which had been obtained in a synthesis of the aryloxy titanium halide compound, in which 6.8 g of phenol was used as the species of the phenols. Propylene was polymerized according to the Polymerization Process B.
Results are shown in Table 1.

EXAMPLE 10

The catalyst component was produced in the same way as in Example 1 except for using 4.5 g of catechol as the species of the phenols in the synthesis of the aryloxy titanium halide compound. Propylene was polymerized according to Polymerization Process B. Results are shown in Table 1.

EXAMPLE 11

The catalyst component was produced in the same way as in Example 1 except for using 12.5 g of p-chlorophenol as the species of the phenols in the synthesis of the aryloxy titanium halide compound. Propylene was polymerized according to

Polymerization Process B. Results are shown in Table 1.

EXAMPLES 12 to 16

The catalyst components were produced in the same way as in Example 1 except for conducting the reaction of the organomagnesium compounds and carbon tetrachloride used as the halogenated carbon, in which various electron donor compounds were used in various amounts as shown in Table 2 instead of 2.0 ml of ethyl benzoate. Polymerization of propylene was carried out according to Polymerization Process B except for using the catalyst amounts shown in Table 2.
Results are shown in Table 2.

Table 1

| Nos. of Example and Comparative Example | A (g/g/hr.atm) | H.I. (%) | ρB (g/ml) |
|---|---|---|---|
| Example 1 (Polymerization Process A) | 575 | 96.1 | 0.43 |
| Example 1 (Polymerization Process B) | 619 | 94.8 | 0.43 |
| Comparative Example 1 | 372 | 93.6 | 0.40 |
| Example 2 | 622 | 94.1 | 0.42 |
| " 3 | 590 | 93.8 | 0.40 |
| " 4 | 611 | 94.2 | 0.43 |
| " 5 | 598 | 94.7 | 0.42 |
| " 6 | 600 | 94.2 | 0.40 |
| " 7 | 591 | 94.0 | 0.41 |
| " 8 | 614 | 94.3 | 0.42 |
| " 9 | 588 | 93.8 | 0.40 |
| " 10 | 621 | 94.2 | 0.42 |
| " 11 | 633 | 94.2 | 0.42 |

Table 2

| No. of Example | Electron Donor Compound | Amount of Electron Donor Compound (ml) | A (g/g.hr.atm) | H.I. (%) | $\rho B$ (g/ml) | Polymerization Catalyst: Amount of Catalyst Component (mg) | TEAL (ml) | DEAL (ml) | EPA (ml) |
|---|---|---|---|---|---|---|---|---|---|
| Example 12 | EPT | 2.5 | 628 | 94.4 | 0.41 | 40 | 0.5 | 0.2 | 0.14 |
| Example 13 | EPA | 6.0 | 593 | 94.7 | 0.43 | 40 | 0.3 | 0.1 | 0.14 |
| Example 14 | EE | 10.0 | 595 | 94.7 | 0.44 | 40 | 0.5 | 0.1 | 0.12 |
| Example 15 | NBE | 21.4 | 635 | 93.9 | 0.44 | 40 | 0.8 | 0.3 | 0.16 |
| Example 16 | NOE | 80.0 | 633 | 93.8 | 0.42 | 40 | 0.3 | 0.2 | 0.14 |

EPT: ethyl p-toluate
EPA: ethyl p-anisate
EE : ethyl ether
NBE: n-butyl ether
NOE : n-octyl ether
TEAL: triethyl aluminum
DEAC: diethyl aluminum chloride

EXAMPLE 17

Into a 300 ml four necked flask provided with a stirrer, of which interior had been replaced with dry nitrogen was poured 143 ml of the n-heptane solution of n-butyl magnesium chloride·butylether coordination substance (concentration = 0.73 mol/l) which was used in Example 2. Then the flask was immersed into a refrigerant to cool the solution to 0°C. Into the solution 25 g of hexachloroethane dissolved in 100 ml of n-heptane was added dropwise as the halogenated carbon under stirring. The catalyst component was produced in the same way as in Example 1 except that the solution was maintained under stirring after the addition of hexachloroethane at 0°C for 40 minutes, at normal temperature for 40 minutes and at 80°C for 60 minutes to obtain the solid state product. Propylene was polymerized according to Polymerization Process B. Results are shown in Table 3.

EXAMPLE 18

The catalyst component was produced in the same way as in Example 17 except for using 0.105 mol of a n-heptane solution of ethyl magnesium chloride·ethyl ether instead of 143 ml of the n-heptane solution of n-butyl magnesium chloride ·butyl ether coordination substance of Example 17. Propylene was polymerized according to Polymerization Process B. Results are shown in Table 3.

EXAMPLE 19

The catalyst component was produced in the same way

as in Example 17 except for using 75 ml of a n-butyl ether solution of n-butyl magnesium chloride (concentration = 1.4 mols/l) instead of 143 ml of the n-heptane solution of n-butyl magnesium chloride·butyl ether coordination substance of Example 17. Proopylene was polymerized according to Polymerization Process B. Results are shown in Table 3.

EXAMPLE 20

The catalyst component was produced in the same way as in Example 4 except for using 30 ml of n-butyl ether as the electron donor compound instead of 2.0 ml of ethyl benzoate of Example 4. Propylene was polymerized according to Polymerization Process B. Results are shown in Table 3.

Table 3

| No. of Example | A (g/g·hr.atm) | H.I. (%) | ρB (g/ml) |
|---|---|---|---|
| Example 17 | 633 | 94.5 | 0.42 |
| Example 18 | 588 | 94.1 | 0.41 |
| Example 19 | 596 | 93.5 | 0.41 |
| Example 20 | 647 | 94.2 | 0.43 |

COMPARATIVE EXAMPLE 2

Into a 300 ml four necked flask provided with a stirrer, of which interior had been replaced with dry nitrogen was poured 161 ml of the n-heptane solution of n-butyl ethyl magnesium of Example 1. Into the solution 25 ml of carbon tetrachloride dissolved in 75 ml of n-heptane was added dropwise at room temperature. A solid state product was obtained by maintaining the solution under stirring after the addition of carbon tetrachloride at normal temperature for 80 minutes and further at 80°C for 60 minutes. Then, the solution was left standing to cool upto room temperature at the stirring was stopped. After the solid state product was sedimented, the supernatant was extracted by the decantation. Then, 200 ml of n-heptane was again poured into the flask and the stirring, sedimentation and decantation were repeated 5 times to wash the solid state product. Into the flask 100 ml of kerosene was poured to suspend the solid state product and 100 ml of a kerosene solution dissolving 8.7 ml of p-cresol and 2.0 ml of ethyl benzoate was added dropwise into the resulting suspension, while it was maintained at 30°C under stirring. The solution was elevated in temperature to 60°C under stirring. After treated at 60°C for 2 hours it was left standing to cool and the stirring was stopped. The solid was sedimented and the supernatant was extracted. After that, 200 ml of n-heptane was poured into the flask and the stirring, sedimentation and decantation were repeated 5 times to wash the treated solid. The treated solid and 17.9 ml of titanium tetrachloride were charged into a 100 ml four necked flask provided with a stirrer, of which interior had been replaced with dry nitrogen. They are elevated in temperature to 60°C in an oil bath under stirring and treated at 60°C for 2 hours.

After this treatment the treated suspension was filtered. After the filtration mass was washed with 1 l of n-heptane it

was vacuum-dryed at 40°C for 5 hours to give a catalyst component. Propylene was polymerized according to Polymerization Process B. Results are as follows:

A = 158 H.I. = 88.3 $\rho B$ = 0.30

COMPARATIVE EXAMPLE 3

A catalyst component was produced in the same way as in Example 1 except for excluding ethyl benzoate in the reaction of the organomagnesium compound and carbon tetrachloride of Example 1. Propylene was polymerized according to Polymerization Process B. Results are as follows:

A = 158 H.I. = 88.7 $\rho B$ = 0.30

COMPARATIVE EXAMPLE 4

A catalyst component was produced in the similar way as in Example 1 except for treating the solid state product only by 35.7 ml of $TiCl_4$. Propylene was polymerized according to Polymerization Process B. Results are as follows:

A = 157 H.I. = 88.2 $\rho B$ = 0.30

WHAT IS CLAIMED IS:

(1) A process for producing a catalyst component used for the polymerization of an α-olefin comprising treating a solid product which is obtained by reacting an organomagnesium compound represented by the general formula,

$$R^1MgX^1$$

wherein $R^1$ shows a hydrocarbon group having 1 to 20 carbon atoms and $X^1$ shows a halogen atom or a hydrocarbon group having 1 to 20 carbon atoms with a halogenated carbon in the presence of an electron donor compound, with a titanium compound represented by the general formula,

$$Ti(OA)_l X_{4-l}$$

wherein A shows an aryl group, X shows a halogen atom and l shows a real number of $0 < l < 4$ in the presence of a halogenated carbon.

(2) The process for producing the catalyst component used for the polymerization of an α-olefin as set forth in claim 1, wherein the electron donor compound is at least one compound or mixture selected from organic acid esters, organic ether compounds, polysiloxanes, thioethers, organic ketones and amines.

(3) The process for producing the catalyst component used for the polymerization of an α-olefin as set forth in claim 1 or 2, wherein the halogenated carbon is a compound shown by the general formula,

$$C_mX^2_{2m+2}$$

therein $X^2$ representing a halogen atom selected from chlorine,

bromine and iodine.